# EUROPEAN PATENT SPECIFICATION

(11) **EP 1 312 504 B1**
(45) Date of publication and mention of the grant of the patent: **16.03.2005**
(21) Application number: 02257683.9
(22) Date of filing: 06.11.2002
(51) Int. Cl.: B60Q 1/26

(54) **Warning lamp**
Warnlampe
Lampe de signalisation

(30) Priority: 15.11.2001 GB 0127367
(43) Date of publication of application: 21.05.2003
(73) Proprietor: Britax PMG Limited, Warwick CV34 6DE (GB)
(72) Inventor: Izadi, Bejan, Swanland, E. Yorkshire, HU14 3GD (GB)
(74) Representative: Waddington, Richard

(56) References cited:
- EP-A- 0 347 185
- DE-A- 3 920 761
- GB-A- 739 440
- US-A- 4 229 781
- US-A- 5 078 658

## Description

This invention relates to a warning lamp of the type having a light source mounted on a hollow pillar and a reflector mounted on a rotary platform which is journalled on the pillar and driven by an electric motor, the reflector being arranged to direct light from said light source in directions substantially perpendicular to the axis of rotation of said platform. A warning light of this type is disclosed in EP-A-0879736 (A837).

It is known for the rotary platform to have a cylindrical flange which is engaged by a solid rubber pulley mounted on the shaft of the electric motor. With this type of coupling arrangement, it is necessary to provide a tolerance absorbing device, for example, in the motor mounting, to ensure that the pulley remains reliably engaged with the flange. Such a warning lamp according to the preamble of claim 1, is disclosed in EP-A-0 347 185.

According to the invention, the electric motor is arranged to drive a pulley formed from resiliently compressible material and comprising a plurality of peripheral ribs having annular recesses therebetween, the ribs being arranged to engage with the rotary platform.

In use, the ribs are compressed radially and expand axially into the annular recesses. This enable satisfactory driving conditions to be maintained under a range of tolerances and temperature changes without the requirement for any other form of tolerance absorbing device.

An embodiment of the invention will now be described, by way of example, with reference to the accompanying drawings, in which:
Figure 1 is a partially broken away side view of a warning lamp in accordance with the invention with the base and rotary platform shown in cross-section taken on a diametrically oriented plane;
Figure 2 is an exploded view of the base, rotary platform and motor showing the lamp holder spaced apart from the top of the hollow pillar;
Figure 3 is a perspective view of the lamp holder and its associated contacts; and
Figure 4 is an enlarged cross-sectional view showing the pulley connecting the motor to the rotary platform.

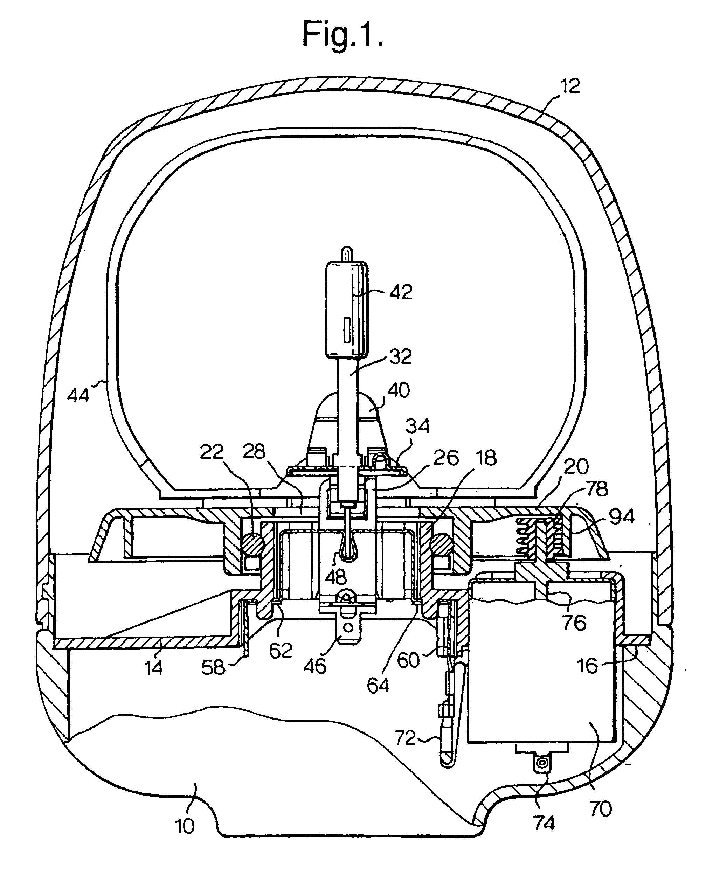

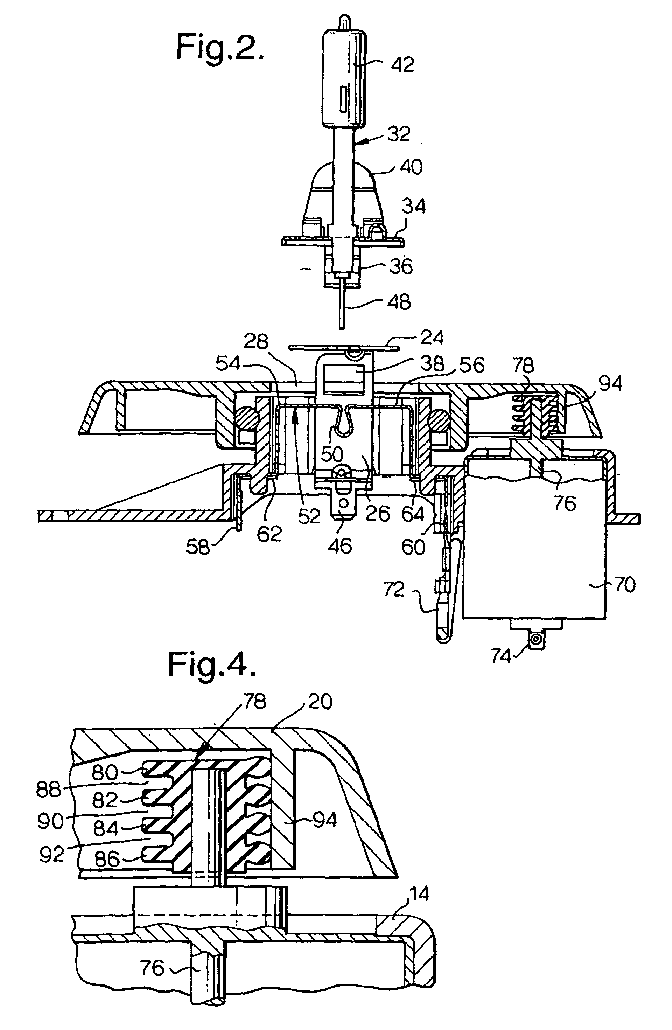

Referring to Figures 1 to 3, a warning lamp in accordance with the invention has a hollow base 10 and a translucent dome-like cover 12, both formed from plastics material. The base 10 is opaque, while the cover 12 is coloured in accordance with the required colour of light from the lamp.

An electrically insulating base plate 14 is mounted on a shoulder 16 within the base 10. A hollow stationery shaft 18 projects upwardly from the centre of the plate 14 and has a reflector platform 20 journalled thereon by means of a ball race 22.

A metal lamp-mounting platform 24 is formed integrally with a pair of legs 26 that project downwardly through a hole 28 in the reflector platform 20 and are secured to the base plate 14 below the bottom of the shaft 18.

A bulb holder 32 has a circular flange 34 which abuts against the top of the platform 24 and is held in place thereon by a clip having resilient lugs 36 that engage in respective windows 38 in each of the legs 26. The clip also has finger grips 40 which, when squeezed together, disengage the lugs 36 from the windows 38 and allow the bulb holder 34 to be removed. The bulb holder 34 supports a bulb 42 which is located at the focus of a parabolic or hyperbolic reflector 44 that is mounted on the rotary platform 20. The reflector 44 thus produces a generally horizontal beam of light which rotates with the platform 20.

The flange 36, which serves as one terminal of the bulb holder 34, is in electrical connection with the platform 24. Each leg 26 has a blade terminal 46 on its bottom end. A first of the terminals 46 is connected to a first pole of an electrical power supply (not shown).

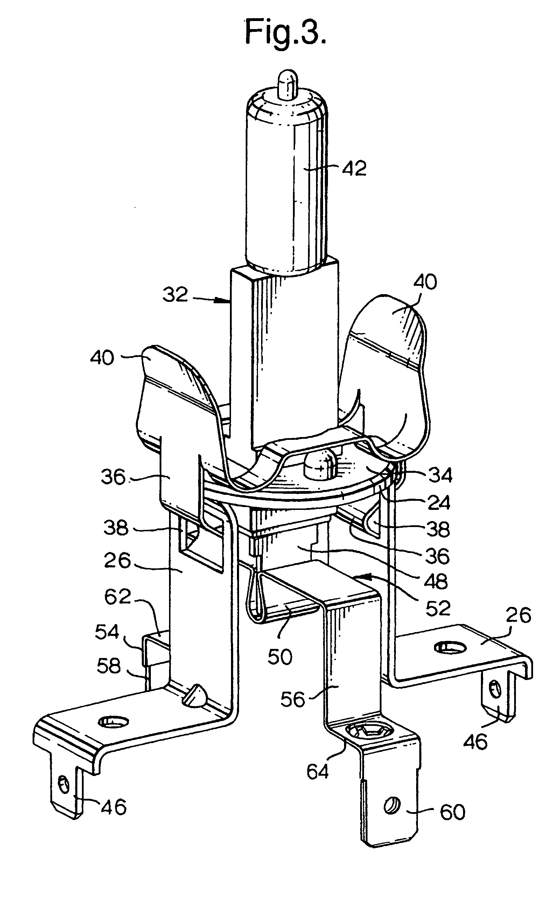

The second terminal of the lamp holder 34 comprises a blade terminal 48 which projects downwardly from the bottom of the bulb holder. This is engaged by a U-shaped central portion 50 of a phosphor bronze strip 52. As can best be seen in Figure 3, the strip 52 also has L-shaped side limbs 54 and 56 which extend down the inside of the shaft 18 and have respective blade terminals 58 and 60 on their bottom ends 62 and 64, which are secured to the base plate 14 adjacent to the bottom of the shaft 18. The terminal 58 is connected to a second pole of the power supply.

An electric motor 70 is mounted on the underside of the base plate 14 and has one of its electrical contacts in the form of a connector 72 engaging with the blade terminal 60. Its other electrical connector takes the form of a blade terminal 74 on its bottom end which is connected by a link (not shown) to the second of the terminals 46.

The shaft 76 of the motor 70 projects upwardly through the base plate 14 and has a rubber pulley 78 mounted on its upper end. As can best be seen in Figure 4, the pulley 78 comprises four cylindrical ribs 80, 82, 84 and 86 with annular grooves 88, 90 and 92 therebetween. The ribs 80-86 engage with a cylindrical flange 94 on the underside of the rotary platform 20. The flange 94 is spaced apart from the axis of the shaft 76 by less than the radius of the ribs 80-86 so that such ribs are compressed radially and bulge axially into the spaces 88-92, as illustrated. This maintains a satisfactory drive under a range of variations of the distance between the shaft 76 and the flange 94. Such differences can be due to manufacturing tolerances and also to changes of temperature. This pulley profile also provides relatively quiet running.

## Claims

1. A warning lamp comprising a reflector (44) mounted on a rotary platform (20) which is journalled on a hollow pillar (18) and driven by an electric motor (70), and a light source (42) mounted on the pillar (18) and having a centre contact (48) engaging with a connector (52) within said pillar (18), the reflector (44) being arranged to direct light from said light source (42) in directions substantially perpendicular to the axis of rotation of said platform (20) wherein the electric motor (70) is arranged to drive a pulley (78) formed from resiliently compressible material, **characterised in that** the pulley comprises a plurality of peripheral ribs (80-86) having annular recesses therebetween, the ribs (80-86) being arranged to engage with the rotary platform (20).

2. A warning lamp according to claim 1, **characterised in that** the ribs (80-86) are arranged to engage with a cylindrical surface (94) of the rotary platform.

3. A warning lamp according to claim 1 or 2, **characterised in that** the pulley (78) is mounted directly on the output shaft (76) of the motor (70).

## Patentansprüche

1. Wamlampe, umfassend einen Reflektor (44), der auf einer Drehplattform (20) montiert ist, welche auf einer hohlen Säule (18) gelagert und durch einen Elektromotor (70) angetrieben ist, sowie eine Lichtquelle (42), die auf der Säule (18) montiert ist und einen Zentralkontakt (48) aufweist, der in Eingriff mit einem Verbinder (52) innerhalb der Säule (18) steht, wobei der Reflektor (44) dazu ausgelegt ist, Licht von der Lichtquelle (42) in Richtungen zu lenken, die im Wesentlichen orthogonal zur Drehachse der Plattform (20) sind, wobei der Elektromotor (70) dazu ausgelegt ist, eine aus einem federnd komprimierbaren Material gebildete Scheibe (78) anzutreiben, **dadurch gekennzeichnet, dass** die Scheibe eine Mehrzahl von Umfangsrippen (80-86) mit ringförmigen Aussparungen dazwischen umfasst, wobei die Rippen (80-86) dazu ausgelegt sind, in Eingriff mit der Drehplattform (20) zu sein.

2. Wamlampe nach Anspruch 1, **dadurch gekennzeichnet, dass** die Rippen (80-86) dazu ausgelegt sind, in Eingriff mit einer zylindrischen Oberfläche (94) der Drehplattform zu sein.

3. Wamlampe nach Anspruch 1 oder 2, **dadurch gekennzeichnet, dass** die Scheibe (78) direkt auf der Ausgangswelle (76) des Motors (70) montiert ist.

## Revendications

1. Lampe de signalisation comprenant un réflecteur (44) installée sur une plate-forme rotative (20) qui est articulée sur roulements sur un montant creux (18) et actionnée par un moteur électrique (70), et une source de lumière (42) montée sur le montant (18) et comportant un contact central (48) coopérant avec un connecteur (52) à l'intérieur dudit montant (18), le réflecteur (44) étant apte à diriger la lumière provenant de ladite source lumineuse (42) dans des directions sensiblement perpendiculaires à l'axe de rotation de ladite plate-forme (20)
dans laquelle le moteur électrique (70) est apte à entraîner une poulie (78) réalisée à partir d'un matériau élastiquement compressible,
**caractérisée en ce que** la poulie comprend des nervures périphériques (80-86) présentant des évidements annulaires entre les nervures, les nervures (80-86) étant aptes à coopérer avec la plate-forme rotative (20).

2. Lampe de signalisation selon la revendication 1,
**caractérisée en ce que** les nervures (80-86) sont aptes à coopérer avec une surface cylindrique (94) de la plate-forme rotative.

3. Lampe de signalisation selon la revendication 1 ou 2,
**caractérisée en ce que** la poulie (78) est montée directement sur l'arbre de sortie (76) du moteur (70).
